(19) **Europäisches Patentamt**
**European Patent Office**
**Office européen des brevets**

(11) **EP 3 721 237 B1**

(12) **FASCICULE DE BREVET EUROPEEN**

(45) Date de publication et mention
de la délivrance du brevet:
**28.04.2021 Bulletin 2021/17**

(51) Int Cl.:
***G01P 5/24*** *(2006.01)*      ***G01F 1/66*** *(2006.01)*

(21) Numéro de dépôt: **18811590.1**

(22) Date de dépôt: **07.12.2018**

(86) Numéro de dépôt international:
**PCT/EP2018/084044**

(87) Numéro de publication internationale:
**WO 2019/110827 (13.06.2019 Gazette 2019/24)**

(54) **PROCÉDÉ, COMPTEUR DE FLUIDE, PROGRAMME D'ORDINATEUR ET MOYENS DE STOCKAGE DE MESURE D'UNE VITESSE D'UN FLUIDE**

VERFAHREN, FLÜSSIGKEITSMESSGERÄT, COMPUTERPROGRAMM UND SPEICHERMITTEL ZUR MESSUNG EINER GESCHWINDIGKEIT EINES FLUIDS

METHOD, FLUID METER, COMPUTER PROGRAM AND STORAGE MEANS FOR MEASURING A SPEED OF A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2017 FR 1761873**

(43) Date de publication de la demande:
**14.10.2020 Bulletin 2020/42**

(73) Titulaire: **Sagemcom Energy & Telecom SAS 92500 Rueil-Malmaison (FR)**

(72) Inventeur: **TEBOULLE, Henri 92500 Rueil Malmaison (FR)**

(74) Mandataire: **Lavaud, Thomas et al Cabinet Boettcher 16, rue Médéric 75017 Paris (FR)**

(56) Documents cités:
**WO-A1-97/46854      FR-A1- 2 260 229
US-A- 4 515 021      US-A1- 2017 227 568**

**Description**

L'invention concerne le domaine des procédés de mesure d'une vitesse d'un fluide.

ARRIERE PLAN DE L'INVENTION

Un compteur de fluide à ultrason utilise classiquement, pour mesurer un débit d'un fluide circulant dans un tuyau, un dispositif de mesure de la vitesse du fluide par émission et réception de signaux ultrasonores de mesure.

Le dispositif de mesure comporte un conduit, raccordé au tuyau, dans lequel circule le fluide. Pour mesurer la vitesse du fluide, on émet dans le conduit un signal ultrasonore de mesure parcourant un trajet de longueur définie, on mesure les temps de trajet mis par le signal ultrasonore de mesure pour parcourir le trajet de longueur définie d'amont en aval et d'aval en amont, et on estime la vitesse du fluide à partir notamment de la longueur définie et de la différence entre les temps de trajet.

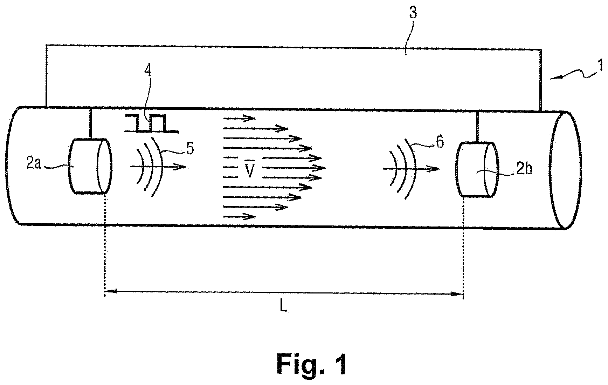

Un tel dispositif de mesure 1, parfois désigné par les termes anglais *classical pipe,* est visible sur la figure 1. Le dispositif de mesure 1 comporte un premier transducteur 2a, un deuxième transducteur 2b, et un module de mesure 3 relié au premier transducteur 2a et au deuxième transducteur 2b.

Le premier transducteur 2a et le deuxième transducteur 2b sont appairés en fréquence et en niveau d'émission. Le premier transducteur 2a et le deuxième transducteur 2b sont par exemple des transducteurs piézoélectriques.

Le trajet de longueur définie est donc un trajet rectiligne de longueur L entre le premier transducteur 2a et le deuxième transducteur 2b.

Le module de mesure 3 produit un signal électrique d'excitation 4 qui est appliqué en entrée du premier transducteur 2a.

Le premier transducteur 2a émet à partir du signal électrique d'excitation 4 un signal ultrasonore de mesure 5. Le deuxième transducteur 2b reçoit un signal ultrasonore de mesure reçu 6 résultant de la propagation dans le fluide du signal ultrasonore de mesure 5.

Le module de mesure 3 mesure le temps de trajet mis par le signal ultrasonore de mesure 5 pour parcourir le trajet de longueur définie d'amont en aval.

Le module de mesure 3 mesure en réalité un temps de transfert global $T_{AB}$ du premier transducteur 2a vers le deuxième transducteur 2b.

Le temps de transfert global $T_{AB}$ est tel que : $T_{AB}=TA_A+ToF_{AB}+TR_B$, où :

- $TA_A$ est un temps d'allumage du premier transducteur 2a ;
- $ToF_{AB}$ correspond au *Time of Flight* (« Temps de Vol », en français) mis par le signal ultrasonore de mesure 5 pour parcourir le trajet de longueur définie entre le premier transducteur 2a et le deuxième transducteur 2b ;
- $TR_B$ est un temps de réception du deuxième transducteur 2b.

De même, le deuxième transducteur 2b émet un signal ultrasonore de mesure qui est reçu par le premier transducteur 2a.

Le temps de transfert global $T_{BA}$ est tel que : $T_{BA}=TA_B+ToF_{BA}+TR_A$, où :

- $T_{AB}$ est un temps d'allumage du deuxième transducteur 2b ;
- $ToF_{BA}$ correspond au *Time of Flight* mis par le signal ultrasonore de mesure pour parcourir le trajet de longueur définie entre le deuxième transducteur 2b et le premier transducteur 2a ;
- $TR_A$ est un temps de réception du premier transducteur 2a.

En supposant que :
$TA_A=TA_B$ et $TR_A=TR_B$, on obtient :
$\Delta T=T_{BA}-T_{AB}=TOF_{BA}-TOF_{AB}=DTOF$,
où DToF est le *Differential Time of Flight.*

Or, le DToF est proportionnel à la vitesse moyenne $\overline{V}$ du fluide, et le module de mesure 3 calcule alors la vitesse moyenne $\overline{V}$ du fluide en utilisant la formule : $DToF=2L.\overline{V}(C^2-\overline{V}^2)$, où C est la vitesse d'une onde ultrasonore dans le fluide. Par exemple, la vitesse d'une onde ultrasonore dans l'eau est égale à environ 1500m/s, et dépend de la température de l'eau.

Le module de mesure 3 déduit alors de la vitesse moyenne $\overline{V}$, signée, le débit du fluide circulant dans le tuyau.

Le document FR 2 260 229 A1 décrit un générateur de signaux de référence temporelle de l'art antérieur, incorporé dans un appareil de mesure de la vitesse d'un courant de fluide.

OBJET DE L'INVENTION

L'invention a pour objet d'améliorer les mesures de débit réalisées par un compteur de fluide à ultrason et de réduire une consommation électrique nécessitée par ces mesures de débit.

RESUME DE L'INVENTION

En vue de la réalisation de ce but, on propose un procédé de mesure d'une vitesse d'un fluide, comprenant l'étape de mesurer un temps de trajet mis par un signal ultrasonore de mesure pour parcourir un trajet de longueur définie, le signal ultrasonore de mesure étant généré par un transducteur soumis à un signal électrique d'excitation. Selon l'invention, le signal électrique d'excitation comporte une première portion de signal suivie d'une deuxième portion de signal, la première portion de signal étant un signal périodique présentant un motif ayant une amplitude maximale décroissante, et la deuxième portion de signal étant un signal périodique de même motif ayant une amplitude maximale constante.

Grâce au signal électrique d'excitation qui vient d'être décrit, le signal ultrasonore de mesure reçu suite à son parcours présente des lobes quasi identiques.

Le fait d'avoir des lobes quasi identiques facilite les mesures de vitesse et améliore la précision de ces mesures de vitesse (et donc de débit). De plus, on peut ainsi exploiter les premiers lobes des signaux ultrasonores de mesure reçus pour produire les mesures de temps de trajet, ce qui permet de réduire la consommation électrique nécessitée par les mesures de vitesse.

On propose aussi un compteur de fluide à ultrason comportant un premier transducteur, un deuxième transducteur, et un module de mesure relié au premier transducteur et au deuxième transducteur, le compteur de fluide à ultrason étant agencé pour mettre en œuvre le procédé de mesure qui vient d'être décrit.

On propose aussi un programme d'ordinateur comprenant des instructions pour mettre en œuvre, par un microcontrôleur d'un compteur de fluide à ultrason, le procédé de mesure qui vient d'être décrit.

On propose de plus des moyens de stockage qui stockent un programme d'ordinateur comprenant des instructions pour mettre en œuvre, par un microcontrôleur d'un compteur de fluide à ultrason, le procédé de mesure qui vient d'être décrit.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 représente un compteur de fluide à ultrason de l'art antérieur ;
- la figure 2 représente un compteur de fluide à ultrason dans lequel est mis en œuvre le procédé de mesure selon l'invention ;
- la figure 3 représente un signal ultrasonore de mesure reçu et un signal électrique d'excitation utilisés lors de la mise en œuvre du procédé de mesure selon l'invention ;
- la figure 4 représente un signal ultrasonore de mesure reçu et un signal électrique d'excitation utilisés lors de la mise en œuvre d'un procédé de mesure de l'art antérieur.

DESCRIPTION DETAILLEE DE L'INVENTION

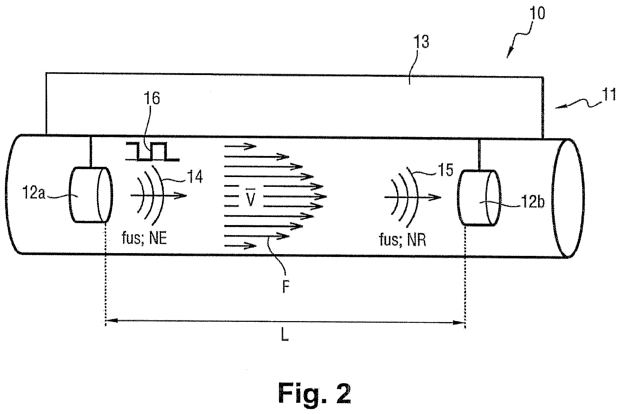

En référence à la figure 2, le procédé de mesure d'une vitesse d'un fluide selon l'invention est ici mis en œuvre dans un compteur d'eau à ultrason 10.

Le compteur d'eau à ultrason 10 comporte un conduit dans lequel circule de l'eau fournie par un réseau de distribution à une installation, ainsi qu'un dispositif de mesure de la vitesse de l'eau 11.

L'eau circule dans le conduit d'amont en aval, comme cela est indiqué par le sens des flèches F, mais pourrait tout aussi bien circuler d'aval en amont.

Le dispositif de mesure 11 comporte un premier transducteur 12a, un deuxième transducteur 12b, et un module de mesure 13 relié au premier transducteur 12a et au deuxième transducteur 12b.

Le premier transducteur 12a et le deuxième transducteur 12b sont appairés. Le premier transducteur 12a et le deuxième transducteur 12b sont ici des transducteurs piézoélectriques.

Le module de mesure 13 comporte un composant de traitement adapté à exécuter des instructions d'un programme pour mettre en œuvre le procédé de mesure selon l'invention. Le composant de traitement est en l'occurrence un microcontrôleur, mais pourrait être un composant différent, par exemple un processeur ou un FPGA.

Le module de mesure 13 pilote le premier transducteur 12a et le deuxième transducteur 12b.

Le premier transducteur 12a et le deuxième transducteur 12b remplissent chacun successivement la fonction d'un émetteur de signaux ultrasonores de mesure 14, et la fonction d'un récepteur de signaux ultrasonores de mesure reçus 15.

Le module de mesure 13 génère des signaux électriques d'excitation 16, et fournit à l'émetteur les signaux électriques d'excitation 16.

L'émetteur transforme chaque signal électrique d'excitation 16 en un signal ultrasonore de mesure 14. Le module de mesure 13 acquiert les signaux ultrasonores de mesure reçus 15 qui sont reçus par le récepteur.

L'émetteur émet les signaux ultrasonores de mesure 14 à une fréquence d'émission fus. La fréquence fus est classiquement comprise entre 900kHz et 4MHz, et est ici égale à 1MHz.

Les signaux ultrasonores de mesure 14 parcourent ainsi, entre le premier transducteur 12a et le deuxième transducteur 12b, un trajet de longueur définie L d'amont en aval et d'aval en amont. Le trajet de longueur définie est ici un trajet rectiligne entre le premier transducteur 12a et le deuxième transducteur 12b.

Sur la figure 2, on a représenté le premier transducteur 12a remplissant la fonction d'un émetteur et le deuxième transducteur 12b remplissant la fonction d'un récepteur. Le signal électrique d'excitation 16 est donc appliqué en entrée du premier transducteur 12a pour émettre le signal ultrasonore de mesure 14. Le signal ultrasonore de mesure 14 parcourt donc le trajet de longueur définie L d'amont en aval. Le signal ultrasonore de mesure 14 est émis par l'émetteur avec un niveau NE. Le signal ultrasonore de mesure reçu 15 est reçu par le récepteur avec un niveau NR inférieur au niveau NE.

Le module de mesure 13 produit une mesure de temps de trajet représentative d'un temps mis par le signal ultrasonore de mesure 14 pour parcourir le trajet de longueur définie L d'amont en aval, puis produit une mesure de temps de trajet représentative d'un temps mis par le signal ultrasonore de mesure 14 pour parcourir le trajet de longueur définie L d'aval en amont, puis enfin évalue la vitesse de l'eau en fonction de ces mesures de temps de trajet.

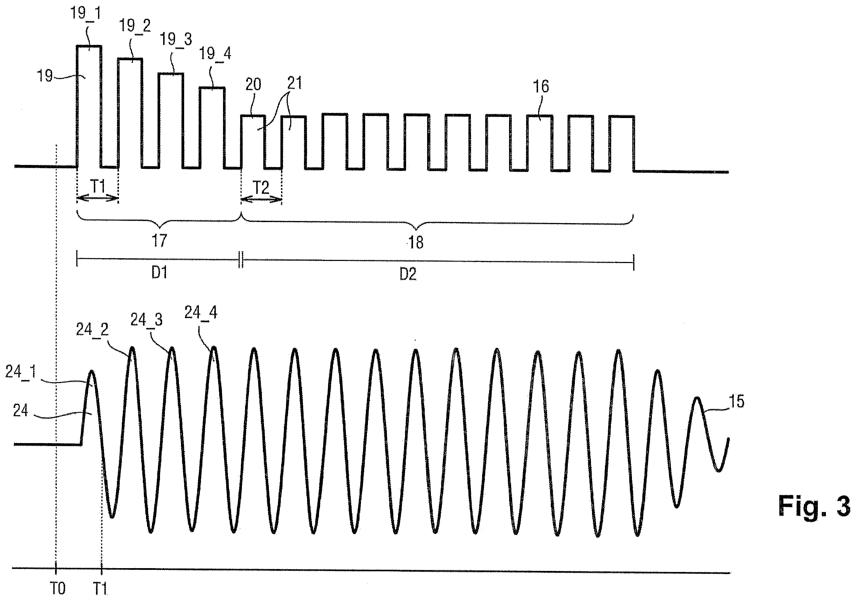

On décrit maintenant, en référence à la figure 3, le signal électrique d'excitation 16.

Le signal électrique d'excitation 16 comporte une première portion de signal 17 suivie d'une deuxième portion de signal 18.

La première portion de signal 17 est un signal périodique présentant un motif 19 répété périodiquement selon une première période T1 et ayant une amplitude maximale décroissante. La première portion de signal 17 est un signal rectangulaire. Le motif 19 de la première portion de signal 17 est donc un rectangle. Le motif 19 peut aussi être nommé carré ou créneau.

La première portion de signal 17 comporte ici quatre motifs 19 : un premier motif 19_1, un deuxième motif 19_2, un troisième motif 19_3 et un quatrième motif 19_4.

La première portion de signal 17 présente une première durée D1, qui est donc égale à quatre fois la première période T1.

Ici, comme chaque motif 19 est un rectangle, l'amplitude maximale d'un motif 19 est l'amplitude de l'état haut du motif 19.

L'amplitude maximale du motif 19 de la première portion de signal 17 décroît selon une fonction linéaire.

Par « fonction », on entend ici la relation qui, à un moment de survenue ou à un numéro d'ordre de survenue du motif, relie un motif à une valeur d'amplitude maximale du motif.

Le premier motif 19_1 présente ici une amplitude maximale égale à 3V. Le deuxième motif 19_2 présente une amplitude maximale égale à 2,75V. Le troisième motif 19_3 présente une amplitude maximale égale à 2,5. Le quatrième motif 19_4 présente une amplitude maximale égale à 2,25V. Le motif 20, qui suit le quatrième motif 19_4, et qui est le premier motif de la deuxième portion de signal 18, présente une amplitude maximale égale à 2V.

La deuxième portion de signal 18 est un signal périodique présentant un motif 21 répété périodiquement selon une deuxième période T2 et ayant une amplitude maximale constante. Par « amplitude maximale constante », on entend bien sûr que l'amplitude maximale peut varier mais avec des variations de faible amplitude, par exemple comprises entre 1% et 5% de l'amplitude maximale moyenne du motif 21.

La deuxième période T2 est égale à la première période T1. La deuxième portion de signal 18 est un signal rectangulaire. Le motif 21 de la deuxième portion de signal 18 est donc un rectangle.

La deuxième portion de signal 18 comporte un nombre plus important de motifs 21, de sorte qu'une deuxième durée D2 de la deuxième portion de signal 18 est supérieure à la première durée D1 de la première portion de signal 17.

La première portion de signal 17 constitue ici une portion de départ du signal électrique d'excitation 16, alors que la deuxième portion de signal 18 s'étend à partir de la fin de cette portion de départ jusqu'à la fin du signal électrique d'excitation 16, le signal électrique d'excitation 16 permettant d'obtenir une mesure de temps de trajet représentative d'un temps mis par le signal ultrasonore de mesure 14 pour parcourir le trajet de longueur définie L d'amont en aval.

Le récepteur (c'est à dire le deuxième transducteur 12b sur la figure 2) active la réception du signal ultrasonore de mesure reçu 15 à un moment T0, synchronisé avec l'émission du signal ultrasonore de mesure 14. L'appairage de l'émetteur et du récepteur rend possible cette synchronisation.

On remarque que le signal ultrasonore de mesure reçu 15 présente une forme d'onde ultrasonique presque parfaitement sinusoïdale. En particulier, on note que les quatre premiers lobes 24 du signal ultrasonore de mesure reçu 15, correspondant aux motifs 19 de la première portion de signal 17 du signal électrique d'excitation 16, ont une amplitude presque égale à celle des autres lobes du signal ultrasonore de mesure reçu 15.

La mesure de temps de trajet d'amont en aval est obtenue à partir de la détermination d'un moment de survenue T1 d'un lobe prédéterminé du signal ultrasonore de mesure reçu 15.

Le moment de survenue T1 est ici l'instant où survient un front descendant du lobe prédéterminé. Le moment de survenue T1 est un instant de passage par zéro qui est mesuré par une méthode du type « *Zero Crossing* ».

Comme le signal ultrasonore de mesure reçu 15 présente une forme d'onde ultrasonique presque parfaitement sinusoïdale, il est possible de choisir comme lobe prédéterminé le premier lobe 24_1 du signal ultrasonore de mesure reçu 15. On pourrait bien sûr choisir un lobe différent, par exemple le deuxième lobe 24_2, le troisième lobe 24_3 ou le quatrième lobe 24_4.

Un signal électrique d'excitation semblable au signal électrique d'excitation 16 est ensuite appliqué par le module de mesure 13 en entrée du deuxième transducteur 12b. Un signal ultrasonore de mesure reçu, semblable au signal ultrasonore de mesure reçu 15, est reçu par le module de mesure 13 après avoir parcouru le trajet de longueur définie L d'aval en amont.

La mesure de temps de trajet d'aval en amont est obtenue à partir de la détermination d'un moment de survenue du lobe prédéterminé dudit signal ultrasonore de mesure reçu.

La vitesse de l'eau est ensuite évaluée par le module de mesure 13 en fonction de la mesure de temps de trajet d'amont en aval et de la mesure de temps de trajet d'aval en amont.

La vitesse de l'eau est proportionnelle à une différence entre la mesure de temps de trajet d'aval en amont et la mesure de temps de trajet d'amont en aval.

On note que la vitesse de l'eau mesurée est une vitesse moyenne de l'eau dans le diamètre du conduit, la vitesse des masses d'eau étant en effet différente au centre du conduit et à proximité des parois du conduit.

On note aussi qu'une compensation en température est réalisée, car la vitesse du son dans l'eau varie en fonction de la température de l'eau (c'est aussi le cas pour d'autres fluides, par exemple pour le gaz ou le pétrole).

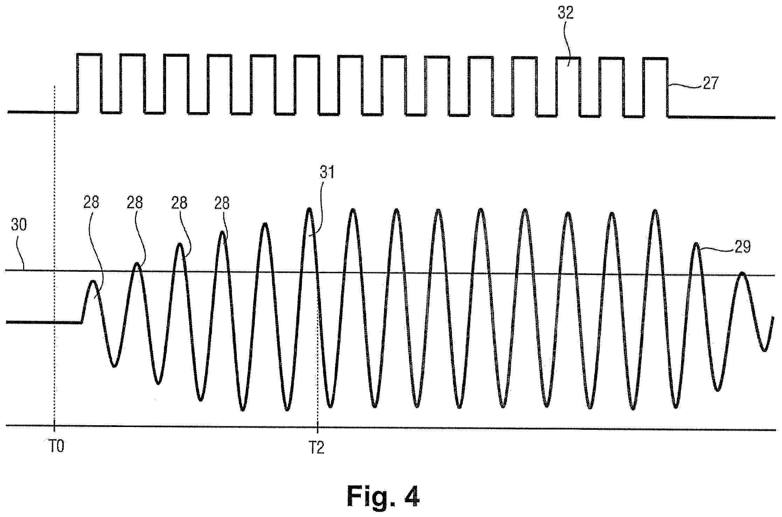

Observons maintenant la situation, en référence à la figure 4, lorsque le signal électrique d'excitation 27 est un simple signal rectangulaire dont les motifs 32 ont une amplitude constante. Dans ce cas, on constate que les premiers lobes 28 du signal ultrasonore de mesure reçu 29 présentent une amplitude réduite, qui augmente progressivement.

Une membrane du transducteur piézoélectrique 12a ou 12b utilisé comme émetteur forme un oscillateur, qui est excité par un signal électrique d'excitation.

L'amplitude croissante des premiers lobes 28 du signal ultrasonore de mesure reçu 29 est due à un régime transitoire dans lequel se trouve l'oscillateur au début de son excitation par le signal électrique d'excitation 27. Le régime transitoire précède un régime établi correspondant aux lobes suivants du signal ultrasonore de mesure reçu 29.

Les premiers lobes 28 présentent donc une amplitude réduite et non constante, et sont donc difficilement exploitables par la méthode du « *Zero Crossing* ».

La mesure de temps de trajet d'amont en aval est obtenue à partir de la détermination d'un moment de survenue T2 d'un lobe prédéterminé du signal ultrasonore de mesure reçu 29, qui n'est donc pas un des premiers lobes 28.

Pour assurer une mesure satisfaisante, il est nécessaire de choisir, comme lobe prédéterminé, un lobe dont on est certain que l'amplitude correspond non pas au régime transitoire mais au régime sinusoïdal établi. On choisit par exemple le quatrième lobe du signal ultrasonore de mesure reçu 29 après qu'une amplitude du signal ultrasonore de mesure reçu ait dépassé un seuil d'amplitude prédéterminé 30. Il s'agit du lobe 31, qui est ici le sixième lobe du signal ultrasonore de mesure reçu 29. La mesure de temps de trajet d'amont en aval est obtenue à partir de la détermination d'un moment de survenue T2.

Les premiers lobes 28 ne sont donc pas utilisés.

Au contraire, grâce à la mise en œuvre du procédé de mesure selon l'invention, on peut utiliser le premier lobe 24_1 (ou l'un des premiers lobes) du signal ultrasonore de mesure reçu 15.

Le fait d'avoir des lobes quasi identiques facilite et augmente donc la précision des mesures. De plus, comme le premier lobe 24_1 ou l'un des premiers lobes peuvent être utilisés, les mesures sont réalisées plus rapidement, ce qui permet de réduire la consommation électrique associée à ces mesures.

On note que les valeurs d'amplitude maximale des motifs 19 de la première portion de signal 17 peuvent être définies au cours de la conception du dispositif de mesure 11 du compteur d'eau à ultrason 10.

Les valeurs d'amplitude maximale des motifs 19 de la première portion de signal 17 peuvent aussi être définies au cours d'une étape de calibration du dispositif de mesure 11. Les valeurs d'amplitude maximale sont alors intégrées dans une table stockée dans une mémoire du dispositif de mesure 11. L'étape de calibration est par exemple réalisée au moment de la fabrication du dispositif de mesure 11.

Bien entendu, l'invention n'est pas limitée au mode de réalisation décrit mais englobe toute variante entrant dans le champ de l'invention telle que définie par les revendications.

On peut bien sûr choisir que l'amplitude maximale du motif de la première portion de signal décroisse selon une fonction différente.

L'amplitude maximale du motif de la première portion de signal peut par exemple décroître selon la fonction :

$$y = \frac{a}{b + c.N} \quad ;$$

où y est une amplitude maximale d'un motif de la première portion de signal, N est le numéro dudit motif à partir d'un premier motif de la première portion de signal, et a, b et c sont des constantes.

On choisira par exemple a=3, b=7/8 et c=1/8.

Le premier motif présente alors une amplitude maximale égale à 3V. Le deuxième motif présente une amplitude maximale égale à 2,67V. Le troisième motif présente une amplitude maximale égale à 2,4. Le quatrième motif présente une amplitude maximale égale à 2,18V. Le premier motif de la deuxième portion de signal présente une amplitude maximale égale à 2V.

On pourrait par ailleurs définir des valeurs fixes et quelconques de décroissance du motif 19. Dans ce cas, l'amplitude maximale du motif de la première portion de signal décroît selon des valeurs discrètes déterminées.

Bien sûr, la première portion de signal peut comporter un nombre de motifs différent de quatre.

On a indiqué que la première portion de signal était suivie de la deuxième portion de signal. Par « suivie », on n'entend pas nécessairement « suivie immédiatement » : une troisième portion de signal pourrait être intercalée entre la première portion de signal et la deuxième portion de signal. De même, la première portion de signal pourrait être précédée par une quatrième portion de signal, et la deuxième portion de signal suivie par une cinquième portion de signal.

On a évoqué un motif rectangulaire, mais le motif pourrait être différent : triangulaire, en dents de scie, sinusoïdal, etc.

L'invention s'applique bien sûr quels que soient le positionnement et la configuration du premier transducteur et du deuxième transducteur. Les signaux ultrasonores de mesure peuvent être émis avec une orientation d'un angle quelconque par rapport à un axe longitudinal du conduit. Les signaux ultrasonores de mesure peuvent être réfléchis par des réflecteurs, par exemple par des miroirs orientés à 45°.

L'invention peut être mise en œuvre pour mesurer la vitesse d'un autre fluide, par exemple du gaz, du pétrole, etc.

## Revendications

1. Procédé de mesure d'une vitesse d'un fluide, comprenant l'étape de mesurer un temps de trajet mis par un signal ultrasonore de mesure (14) pour parcourir un trajet de longueur définie, le signal ultrasonore de mesure (14) étant généré par un transducteur (12a, 12b) soumis à un signal électrique d'excitation (16), le procédé de mesure étant **caractérisé en ce que** le signal électrique d'excitation (16) comporte une première portion de signal (17) suivie d'une deuxième portion de signal (18), la première portion de signal étant un signal périodique présentant un motif (19) ayant une amplitude maximale décroissante, et la deuxième portion de signal étant un signal périodique de même motif (21) ayant une amplitude maximale constante.

2. Procédé de mesure selon la revendication 1, dans lequel l'amplitude maximale du motif (19) de la première portion de signal (17) décroît selon une fonction linéaire.

3. Procédé de mesure selon la revendication 1, dans lequel l'amplitude maximale du motif de la première portion de signal décroît selon une fonction de type :

$$y = \frac{a}{b + c.N},$$

où y est une amplitude maximale d'un motif de la première portion de signal, N est le numéro dudit motif à partir d'un premier motif de la première portion de signal, et a, b et c sont des constantes.

4. Procédé de mesure selon la revendication 3, dans lequel a=3, b=7/8 et c=1/8.

5. Procédé de mesure selon la revendication 1, dans lequel l'amplitude maximale du motif de la première portion de signal décroît selon des valeurs discrètes déterminées.

6. Procédé de mesure selon la revendication 1, dans lequel le signal électrique d'excitation (16) est un signal rectangulaire.

7. Procédé de mesure selon la revendication 1, dans lequel une amplitude maximale du motif (19) de la première portion de signal (17) est comprise entre 3V et 2V, et une amplitude maximale du motif (21) de la deuxième portion de signal (18) est égale à 2V.

8. Procédé de mesure selon la revendication 1, dans lequel le transducteur est un transducteur piézoélectrique.

9. Procédé de mesure selon l'une des revendications précédentes, le procédé de mesure étant mis en œuvre dans un dispositif de mesure (11), le procédé de mesure comprenant une étape de calibration du dispositif de mesure consistant à définir des valeurs d'amplitude maximale des motifs (19) de la première portion de signal (17) et à intégrer les valeurs d'amplitude maximale dans une table stockée dans une mémoire du dispositif de mesure (11).

10. Procédé de mesure selon la revendication 9, dans lequel l'étape de calibration est réalisée au moment d'une fabrication du dispositif de mesure.

11. Compteur de fluide à ultrason agencé pour mesurer la vitesse d'un fluide comportant un premier transducteur à ultrason (12a), un deuxième transducteur à ultrason (12b), et un module de mesure (13) relié au premier transducteur à ultrason et au deuxième transducteur à ultrason, le module de mesure étant agencé pour générer le signal électrique d'excitation et pour le fournir au premier transducteur (12a) et au deuxième transducteur (12b), le compteur de fluide à ultrason étant agencé pour mettre en œuvre le procédé de mesure selon l'une des revendications précédentes.

12. Programme d'ordinateur comprenant des instructions pour mettre en œuvre, par un microcontrôleur d'un compteur de fluide à ultrason selon la revendication 11, le procédé de mesure selon l'une des revendications 1 à 10.

13. Moyens de stockage, **caractérisés en ce qu'**ils stockent un programme d'ordinateur comprenant des instructions pour mettre en œuvre, par un microcontrôleur d'un compteur de fluide à ultrason selon la revendication 11, le procédé de mesure selon l'une des revendications 1 à 10.

## Patentansprüche

1. Messverfahren zum Messen einer Geschwindigkeit eines Fluids, umfassend den Schritt des Messens einer Laufzeit, die von einem Ultraschallmesssignal (14) benötigt wird, um eine Strecke mit definierter Länge zurückzulegen, wobei das Ultraschallmesssignal (14) von einem Wandler (12a, 12b) erzeugt wird, der mit einem elektrischen Anregungssignal (16) beaufschlagt wird, wobei das Messverfahren **dadurch gekennzeichnet ist, dass** das elektrische Anregungssignal (16) einen ersten Signalabschnitt (17) gefolgt von einem zweiten Signalabschnitt (18) umfasst, wobei der erste Signalabschnitt ein periodisches Signal ist, das ein Muster (1) aufweist, das eine abnehmende maximale Amplitude hat, und wobei der zweite Signalabschnitt ein periodisches Signal mit dem gleichen Muster (21) ist, das eine konstante maximale Amplitude hat.

2. Messverfahren nach Anspruch 1, bei dem die maximale Amplitude des Musters (19) des ersten Signalabschnitts (17) gemäß einer linearen Funktion abnimmt.

3. Messverfahren nach Anspruch 1, bei dem die maximale Amplitude des Musters des ersten Signalabschnitts gemäß einer Funktion der Art abnimmt:

$$y = \frac{a}{b+c.N},$$

wobei y eine maximale Amplitude eines Musters des ersten Signalabschnitts ist, N die Nummer des genannten Musters ausgehend von einem ersten Muster des ersten Signalabschnitts ist und a, b und c Konstanten sind.

4. Messverfahren nach Anspruch 3, bei dem a=3, b=7/8 und c=1/8.

5. Messverfahren nach Anspruch 1, bei dem die maximale Amplitude des Musters des ersten Signalabschnitts gemäß vorbestimmen diskreten Werten abnimmt.

6. Messverfahren nach Anspruch 1, bei dem das elektrische Anregungssignal (16) ein Rechtecksignal ist.

7. Messverfahren nach Anspruch 1, bei dem eine maximale Amplitude des Musters (19) des ersten Signalabschnitts (17) zwischen 3V und 2V beträgt und eine maximale Amplitude des Musters (21) des zweiten Signalabschnitts (18) gleich 2V ist.

8. Messverfahren nach Anspruch 1, bei dem der Wandler ein piezoelektrischer Wandler ist.

9. Messverfahren nach einem der vorhergehenden Ansprüche, wobei das Messverfahren in einer Messvorrichtung (11) durchgeführt wird, wobei das Messverfahren einen Schritt der Kalibrierung der Messvorrichtung umfasst, der darin besteht, maximale Amplitudenwerte des Musters (19) des ersten Signalabschnitts (17) zu definieren und die maximalen Amplitudenwerte in eine Tabelle zu integrieren, die in einem Speicher der Messvorrichtung (11) gespeichert ist.

10. Messverfahren nach Anspruch 9, bei dem der Kalibrierschritt zum Zeitpunkt einer Herstellung der Messvorrichtung erfolgt.

11. Ultraschall-Fluidzähler, der ausgebildet ist, um die Geschwindigkeit eines Fluids zu messen, umfassend eine ersten Ultraschall-Wandler (12a), einen zweiten Ultraschall-Wandler (12b) und ein Messmodul (13), das mit dem ersten Ultraschall-Wandler und dem zweiten Ultraschall-Wandler verbunden ist, wobei das Messmodul ausgebildet ist, um das elektrische Anregungssignal zu erzeugen und es an den ersten Wandler (12a) und an den zweiten Wandler (12b) zu liefern, wobei der Ultraschall-Fluidzähler ausgebildet ist, um das Messverfahren nach einem der vorhergehenden Ansprüche durchzuführen.

12. Computerprogramm, umfassend Anweisungen zum Durchführen des Messverfahrens nach einem der Ansprüche 1 bis 10 mittels eines Mikrosteuergerätes eines Ultraschall-Fluidzählers nach Anspruch 11.

13. Speichermittel, die **dadurch gekennzeichnet sind, dass** sie ein Computerprogramm speichern, das Anweisungen zum Durchführen des Messverfahrens nach einem der Ansprüche 1 bis 10 mittels eines Mikrosteuergeräts eines Ultraschall-Fluidzählers umfasst.

**Claims**

1. A measurement method for measuring a fluid speed, the method comprising the step of measuring a travel time taken by an ultrasound measurement signal (14) to travel along a path of defined length, the ultrasound measurement signal (14) being generated by a transducer (12a, 12b) that is subjected to an electrical excitation signal (16), the measurement method being **characterized in that** the electrical excitation signal (16) comprises a first signal portion (17) followed by a second signal portion (18), the first signal portion being a periodic signal presenting a pattern (19) having a maximum amplitude that decreases, and the second signal portion being a periodic signal having the same pattern (21) with a maximum amplitude that is constant.

2. A measurement method according to claim 1, wherein the maximum amplitude of the pattern (19) of the first signal portion (17) decreases in accordance with a linear function.

3. A measurement method according to claim 1, wherein the maximum amplitude of the pattern of the first signal portion decreases in accordance with a function of the type:

$$y = \frac{a}{b + c.N} \quad ,$$

where $y$ is the maximum amplitude for a pattern of the first signal portion, N is the number of said pattern starting from a first pattern of the first signal portion, and $a$, $b$, and $c$ are constants.

4. A measurement method according to claim 3, wherein a=3, b=7/8, and c=1/8.

5. A measurement method according to claim 1, wherein the maximum amplitude of the pattern of the first signal portion decreases with determined discrete values.

6. A measurement method according to claim 1, wherein the electrical excitation signal (16) is a rectangular signal.

7. A measurement method according to claim 1, wherein the maximum amplitude of the pattern (19) of the first signal portion (17) lies in the range 3 V to 2 V, and the maximum amplitude of the pattern (21) of the second signal portion (18) is equal to 2 V.

8. A measurement method according to claim 1, wherein the transducer is a piezoelectric transducer.

9. A measurement method according to any preceding claim, wherein the measurement method is performed in a measurement device (11), the measurement method comprising a step of calibrating the measurement device, which step of calibrating consists in defining maximum amplitude values for the patterns (19) of the first signal portion (17) and in including the maximum amplitude values in a table stored in a memory of the measurement device (11).

10. A measurement method according to claim 9, wherein the calibration step is performed when manufacturing of the measurement device.

11. An ultrasonic fluid meter arranged to measure the speed of a fluid comprising a first ultrasonic transducer (12a), a second ultrasonic transducer (12b), and a measurement module (13) connected to the first ultrasonic transducer and to the second ultrasonic transducer, the measurement module being arranged to generate the electrical excitation signal and to transmit it to the first transducer (12a) and to the second transducer (12b), the ultrasonic fluid meter being arranged to perform the measurement method according to any preceding claim.

12. A computer program comprising instructions for enabling a microcontroller of an ultrasonic fluid meter according to claim 11 to perform the measurement method according to any one of claims 1 to 10.

13. Storage means **characterized in that** they store a computer program comprising instructions for enabling a microcontroller of an ultrasonic fluid meter according to claim 11 to perform the measurement method according to any one of claims 1 to 10.

EP 3 721 237 B1

**Fig. 1**

Fig. 2

Fig. 3

**Fig. 4**

EP 3 721 237 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2260229 A1